# EUROPEAN PATENT APPLICATION

(11) **EP 4 672 447 A1**
(43) Date of publication of application: **31.12.2025**
(21) Application number: 24927665.0
(22) Date of filing: 26.11.2024
(51) Int. Cl.: H01M 50/162, H01M 50/164, H01M 10/658, H01M 50/204, H01M 50/247

(54) **BATTERY CELL, BATTERY MODULE, AND BATTERY PACK AND VEHICLE COMPRISING SAME**

(30) Priority: 15.03.2024 KR 20240036812
(71) Applicant: LG Energy Solution, Ltd., Seoul 07335 (KR)
(72) Inventor: CHUN, Yong Ho, Daejeon 34122 (KR); KIM, Tan, Daejeon 34122 (KR); LEE, Gyeong Tae, Daejeon 34122 (KR); YIM, Sang Wook, Daejeon 34122 (KR); KIM, Tae Wan, Daejeon 34122 (KR)
(74) Representative: Plasseraud IP
(86) International application number: PCT/KR2024/018875
(87) International publication number: WO 2025/192822

(57) **Abstract**

A battery cell covered by a packaging material is disclosed. The packaging material includes an aluminum layer and a polymer layer. The packaging material has a graphite layer on the aluminum layer, or on the polymer layer, or between the aluminum layer and the polymer layer. A battery module, and a battery pack, and a vehicle include the same.

## Description

### TECHNICAL FIELD

The present disclosure relates to a battery cell and a battery module in which deterioration of a battery cell is prevented and performance is increased by resolving thermal imbalance in a battery cell and achieving thermal balancing and the safety of the battery cell is increased by preventing heat concentration on a specific region, a battery pack and a vehicle including the same

### BACKGROUND

Recently, technologies for reducing carbon have been actively developed to address environmental problems, such as abnormal temperatures. In order to reduce carbon, energy is to be produced in an eco-friendly way rather than using fossil fuels, the produced energy is to be stored in the form of electric energy, and the stored electric energy is to be used in vehicles, various industrial sites, and homes.

In order to utilize electric energy for reducing carbon, the use of batteries to and from which electric energy is stored and drawn out is essential. Therefore, securing battery performance is essential to sufficiently store electric energy and use the electric energy without inconvenience.

Batteries mainly use a reduction-oxidation reaction of metal ions, and metal ions are used with high density to increase the capacity, charge/discharge performance, and efficiency of batteries, and research has been actively conducted on materials that make up electrolytes and solid electrolytes. However, in general, as the performance of batteries develops, there is a problem that stability decreases.

Batteries used in vehicles, industries, and homes are manufactured in physical units called packs. A battery pack has a plurality of battery cells embedded inside a battery case and seals the same to prevent fire from spreading to the outside in the event of an accident, such as battery thermal runaway, and protects the internal battery cells from being deteriorated by the influence of an external environment or damaged due to physical reasons.

In a battery pack, a number of battery cells are installed in an intermediate form of a module or an assembly (cell module assembly (CMA)). In the case of a battery module or assembly, a number of battery cells are assembled into a single module or assembly, and a number of modules are fastened inside a pack case, thereby completing a battery pack. When servicing the battery, maintenance is performed in units of these modules or assemblies, thereby facilitating maintenance.

A number of unit battery cells that make up a module or assembly includes a positive electrode, a negative electrode, and an electrolyte. Since battery cells generate heat during charging and discharging, effective heat dissipation for the battery cells is required. In addition, from the perspective of the battery module, assembly, or battery pack, a design for efficient heat dissipation is necessary to prevent safety accidents.

Meanwhile, batteries may deteriorate due to manufacturing errors, excessive charging and discharging, and aging. In addition, if battery deterioration continues, a fire may eventually occur. Therefore, it is necessary to prepare in advance to prevent a fire from occurring in the battery.

To this end, the battery requires cooling of the battery module or assembly through a cooling system, and temperature balancing has to be performed overall from the standpoint of the battery cells constituting the module or assembly.

The contents described as the related art have been provided only to assist in understanding the background of the present disclosure and should not be considered as corresponding to the related art known to those having ordinary skill in the art.

### SUMMARY

According to an embodiment of the present disclosure, the present disclosure provides a battery cell and a battery module capable of improving the performance and safety of a battery cell by performing thermal balancing of the battery cell, and a battery pack and a vehicle including the same.

The technical problems to be addressed in the present disclosure are not limited to the technical problems mentioned above, and other technical problems not mentioned may be clearly understood by a person having ordinary knowledge in the technical field to which the present disclosure pertains from the description below.

Among embodiments, a battery cell covered by a packaging material including an aluminum layer and a polymer layer, wherein the packaging material comprises a graphite layer on the aluminum layer, or on the polymer layer, or between the aluminum layer and the polymer layer.

The graphite layer of the packaging material may be in contact with the aluminum layer.

In the packaging material, the aluminum layer may be on an outside of the polymer layer, and the graphite layer may be on an outside of the aluminum layer.

In the packaging material, the polymer layer and the aluminum layer may be integral, and the graphite layer may bond to the outside of the polymer layer and the aluminum layer.

In the packaging material, the graphite layer may correspond to a side surface of the battery cell.

In the packaging material, an insulating layer may be on an outermost side.

In the packaging material, the polymer layer and the aluminum layer may be integral, the graphite layer may bond to an outside of the polymer layer and the aluminum layer, the graphite layer may bend a plurality of times and bond to wrap the battery cell, and an insulating layer may be on an outside of the graphite layer in a position corresponding to a side surface of the battery cell.

Among embodiments, a battery module comprises: a first battery cell covered by a packaging material including an aluminum layer and a polymer layer; and a second battery cell covered by a packaging material including an aluminum layer and a polymer layer, wherein the packaging material comprises a graphite layer on the aluminum layer, or on the polymer layer, or between the aluminum layer and the polymer layer, wherein the first battery cell and the second battery cell are adjacent to each other.

A pair of first battery cells may be adjacent to each other between a pair of second battery cells.

The pair of first battery cells may be adjacent to each other with the graphite sheet therebetween.

Compression pads may each be on an outside of the second battery cell.

The second battery cell may be between a pair of first battery cells.

Compression pads may each be on an outside of the first battery cell.

A graphite sheet may be between the compression pad and the first battery cell.

A cell bank may comprise at least one first battery cell and at least one second battery cell, and compression pads may each be on opposing outer sides of the cell bank.

A graphite sheet may be between the compression pad and the adjacent first battery cell.

The compression pad may include an insulating layer.

Among embodiments, a battery pack and a vehicle comprise the battery module described above.

According to the battery cell and the battery module of the present disclosure and the battery pack and the vehicle including the same, in the battery cells included in a module or assembly, self-thermal balancing may be performed, thereby increasing the efficiency of the overall thermal management and improving the performance and stability.

In addition, since thermal balancing may be performed in one battery cell, the efficiency of the overall thermal management may be increased and the performance and stability may be significantly improved while using the existing cooling system as it is.

In addition, by effectively using a graphite sheet required for performing thermal balancing of each battery cell, the manufacturing cost may be reduced and the working man/hour (M/H) may be significantly reduced.

The effects obtained from the present disclosure are not limited to the effects mentioned above, and other effects not mentioned may be clearly understood by those skilled in the art to which the present disclosure pertains from the description below.

### BRIEF DESCRIPTION OF THE DRAWINGS

FIG. 1 is a cross-sectional view of a packaging material of a battery cell according to an embodiment of the present disclosure.
FIG. 2 is a diagram illustrating a battery cell according to an embodiment of the present disclosure.
FIG. 3 is a cross-sectional view of a packaging material of a battery cell according to another embodiment of the present disclosure.
FIG. 4 is a diagram illustrating a battery cell according to another embodiment of the present disclosure.
FIG. 5 is a cross-sectional view of the battery cell shown in FIG. 4.
FIG. 6 is a structural diagram of a battery module according to an embodiment of the present disclosure.
FIG. 7 is a structural diagram of a battery module according to another embodiment of the present disclosure.
FIG. 8 is a diagram illustrating a compression pad of a battery module according to an embodiment of the present disclosure.
FIG. 9 is a cross-sectional view of the compression pad of FIG. 8.
FIG. 10 is a diagram illustrating a battery pack and a vehicle to which a battery cell of the present disclosure is applied.

### DETAILED DESCRIPTION

In describing the present disclosure, if a detailed explanation for a related known function or construction is considered to unnecessarily divert the gist of the present disclosure, such explanation has been omitted but would be understood by those skilled in the art. The accompanying drawings of the present disclosure aim to facilitate understanding of the present disclosure and should not be construed as limited to the accompanying drawings. Also, the present disclosure is not limited to a specific disclosed form, but includes all modifications, equivalents, and substitutions without departing from the scope and spirit of the present disclosure.

It will be understood that, although the terms first, second, etc. may be used herein to describe various elements, these elements should not be limited by these terms. These terms are only used to distinguish one element from another.

As used herein, the singular forms "a", "an" and "the" are intended to include the plural forms as well, unless the context clearly indicates otherwise.

It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

In the following description, usage of suffixes, such as 'module', 'part' or 'unit' used for referring to elements is given merely to facilitate explanation of the present disclosure, without having any significant meaning by itself.

When it is mentioned that a certain element is "connected to" or "electrically connected to" a second element, the first element may be directly connected or electrically connected to the second element, but it should be understood that a third element may intervene therebetween. Meanwhile, when it is mentioned that a certain element is "directly connected to" or "directly electrically connected to" a second element, it should be understood that there is no third element therebetween.

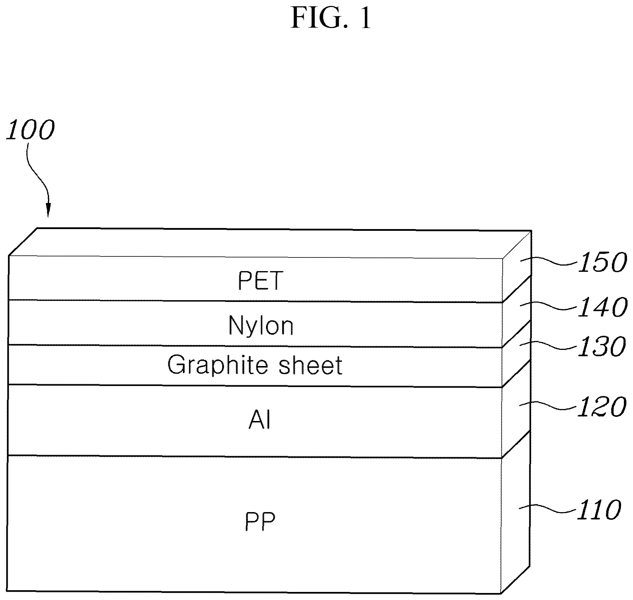

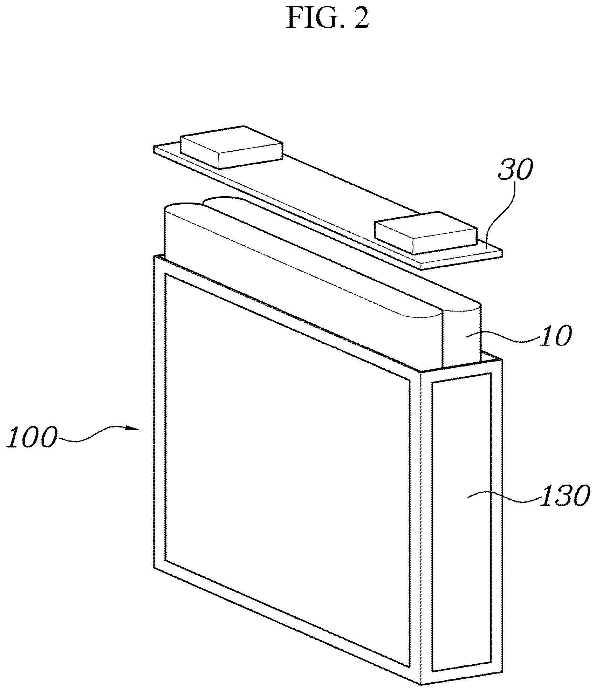

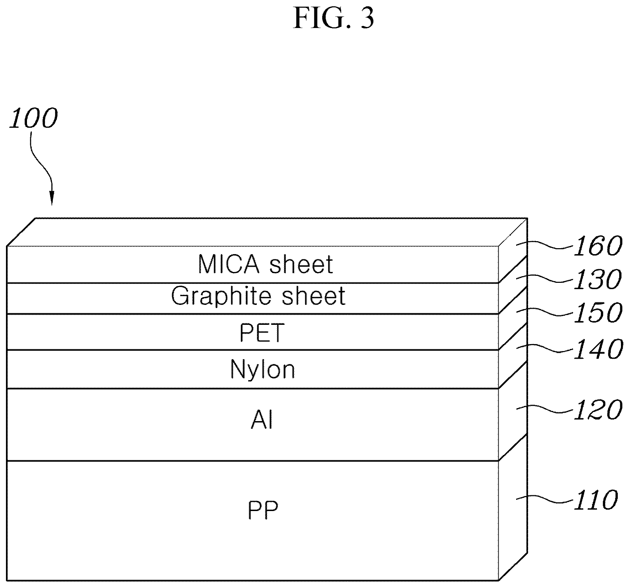

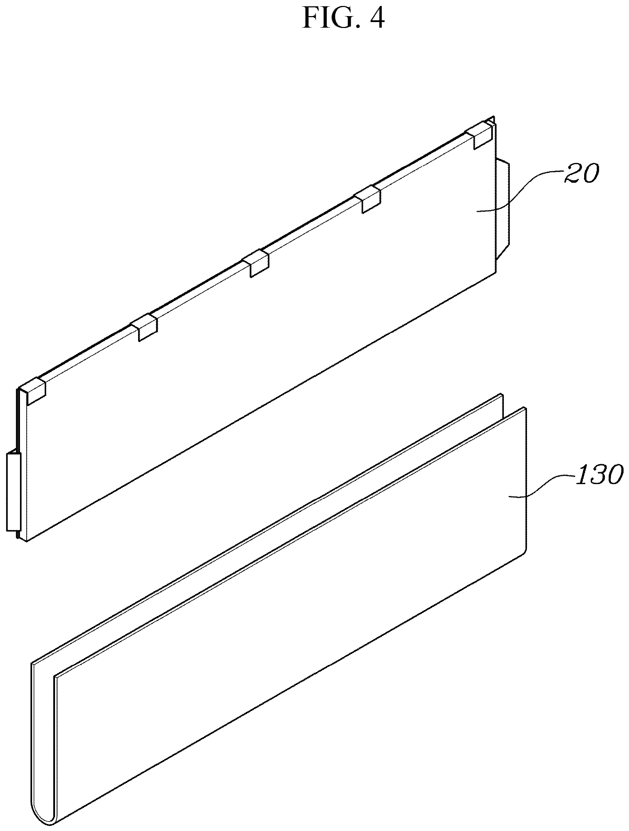

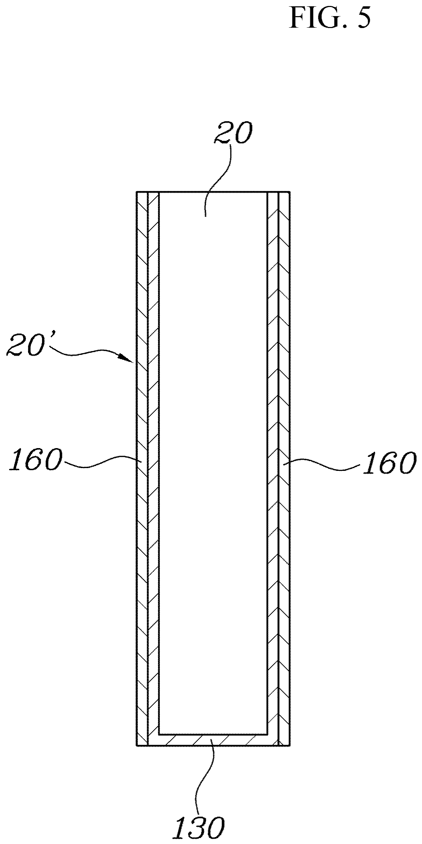

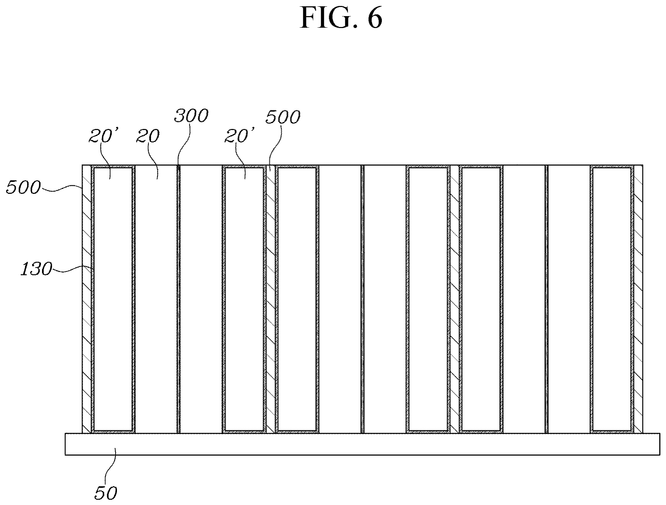

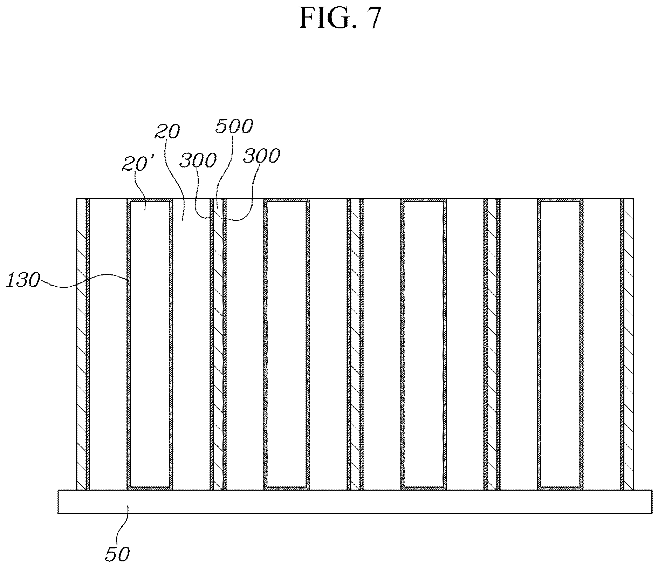

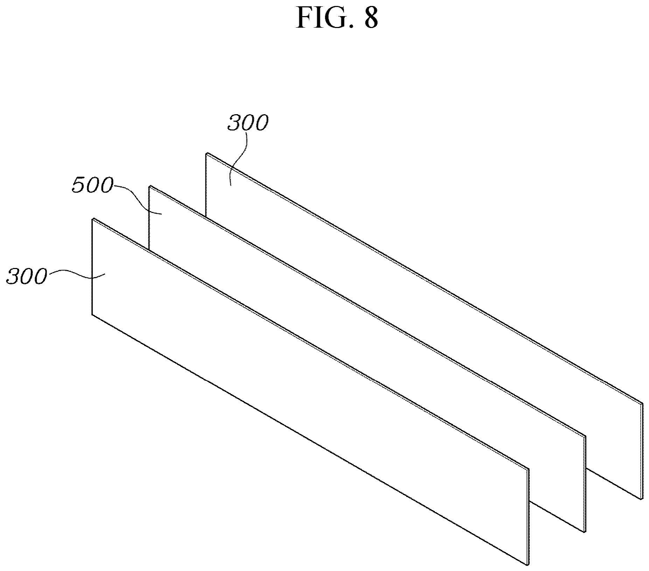

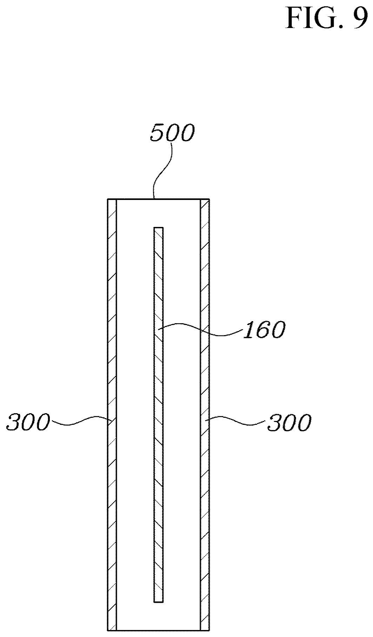

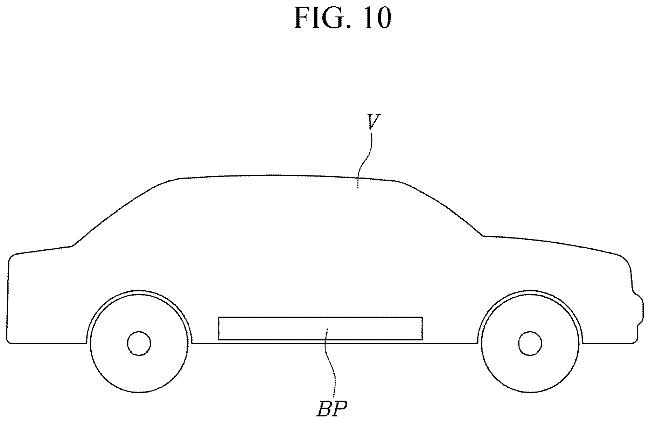

FIG. 1 is a cross-sectional view of a packaging material of a battery cell according to an embodiment of the present disclosure, FIG. 2 is a diagram illustrating a battery cell according to an embodiment of the present disclosure, FIG. 3 is a cross-sectional view of a packaging material of a battery cell according to another embodiment of the present disclosure, FIG. 4 is a diagram illustrating a battery cell according to another embodiment of the present disclosure, FIG. 5 is a cross-sectional view of the battery cell shown in FIG. 4, FIG. 6 is a structural diagram of a battery module according to an embodiment of the present disclosure, FIG. 7 is a structural diagram of a battery module according to another embodiment of the present disclosure, FIG. 8 is a diagram illustrating a compression pad of a battery module according to an embodiment of the present disclosure, FIG. 9 is a cross-sectional view of the compression pad of FIG. 8, and FIG. 10 is a diagram illustrating a battery pack and a vehicle to which a battery cell of the present disclosure is applied.

Hereinafter, embodiments disclosed in this specification will be described in detail with reference to the accompanying drawings. Regardless of the reference numerals, like components are given like reference numerals and redundant descriptions thereof will be omitted.

The temperature of a battery cell rises during charging and discharging, and such a temperature rise causes a decrease in the performance and lifespan of the battery itself. Therefore, a cooling structure is required to constantly maintain the battery cell below a certain temperature. One of such structures is a bottom cooling structure in which coolant flows inside a battery pack to cool the bottom of a battery module. However, this cooling method causes a temperature difference between lower and upper portions of the battery cell, which reduces the efficiency of battery use. To improve this, it is necessary to cool the overall temperature of the battery cell evenly. In other words, thermal balancing is required not only in the battery module but also in the battery cell itself.

The present disclosure is to effectively balance the temperature of a unit battery cell by reducing a temperature difference by location (top-bottom, side-center) of a battery cell in a battery module or assembly or cell bank or stack structure formed by gathering a plurality of battery cells, thereby improving the rapid charging performance and lifespan.

The present disclosure is to solve the problem of a temperature difference by location even in a single battery cell by adding a thin film-type thermally conductive material between battery cells in a stack, assembly, module, bank, etc. structure in which a plurality of battery cells are combined, to reduce the temperature difference in the planar direction of the battery cell.

Battery cells may be classified into prismatic, cylindrical, or pouch-type batteries formed of cans. Various packaging materials of these battery cells are mainly formed of aluminum. In the present disclosure, a thin-film graphite sheet or graphite layer that is lightweight and slim and has excellent thermal conductivity, etc. while having superior thermal conductivity compared to aluminum is applied to the packaging material of these battery cells. In the present disclosure is to secure thermal balancing in a cell unit and prevent flame propagation between cells by applying a graphite layer or sheet in various manners and additionally adding an insulating barrier to a compression pad to suppress thermal propagation between adjacent battery cells.

According to the present disclosure, a plurality of battery cells may be stacked to form a stack or assembly or bank. In the present disclosure, such a group of battery cells is collectively referred to as a battery module. Therefore, the battery module according to the present disclosure should be interpreted as a group of a plurality of battery cells, such as a stack, an assembly, a bank, etc. Also, the battery pack should be understood as including at least one battery module.

FIG. 1 shows a cross-sectional structure of a packaging material of a battery cell according to an embodiment of the present disclosure. The battery cell according to the present disclosure may include an electrode assembly 10 including a positive electrode, a negative electrode, and an electrolyte and a packaging material 100 that surrounds and protects the electrode assembly 10. Also, the packaging material 100 has to be formed of a material capable of preventing the penetration of moisture or foreign substances to prevent short circuits and allows heat exchange with the outside, while preventing the propagation of flame.

The battery cell packaging material 100 of the present disclosure may include an aluminum layer 120 and a polymer layer 110, and additionally, a graphite layer 130 may be located on one side of the aluminum layer 120, one side of the polymer layer 110, or between the aluminum layer 120 and the polymer layer 110. As shown in FIG. 1, a polypropylene (PP) layer is provided as a polymer at the innermost portion. Also, the aluminum layer 120 is provided on the polymer layer 110. The aluminum layer 120 maintains the rigidity of the packaging material 100 and conducts heat, and the internal PP layer 110 is responsible for insulation. The aluminum layer 120 may be formed using various aluminum alloys in addition to pure aluminum.

The outside of the aluminum layer 120 is directly contacted by the graphite layer 130. Unlike aluminum, graphite is a material with excellent thermal conductivity in a width direction rather than a thickness direction. Therefore, aluminum is placed near the electrode assembly of the battery to ensure that heat dissipation and thermal conductivity are achieved first, and graphite is applied thereto to resolve the temperature imbalance in the planar direction of the aluminum. Therefore, through aluminum and graphite, the battery cell may secure both thermal conductivity and thermal balancing in the planar direction. In order to insulate and protect the graphite layer 130, a nylon layer 140 and a polyethylene terephthalate (PET) layer 150 are bonded on the outside to form the packaging material 100.

The embodiment illustrated in FIG. 1 shows a cross-sectional structure of a packaging material in a case in which the graphite layer 130 is placed after the polymer layer 110 and the aluminum layer 120, and these are integrally molded to form the single packaging material 100. In this case, the graphite layer 130 of the packaging material 100 is disposed to be in close contact with the aluminum layer 120, thereby transmitting heat of the aluminum layer 120 in the planar direction to achieve balancing in the planar direction.

FIG. 2 shows a battery cell as an embodiment to which this type of packaging material 100 is applied. The battery cell of FIG. 2 is a prismatic cell and represents a type of cell in which an electrode assembly 10 is inserted into a prismatic can with an internal space and is closed with a lead 30. In this case, the prismatic packaging material 100 is formed of the packaging material of FIG. 1, thereby securing thermal balancing in the planar direction. Alternatively, as illustrated, in the case of the graphite layer 130, it may be possible to partially apply the graphite layer 130 to a relatively large area only in the portion forming the surface, excluding the corner portions of the packaging material.

Meanwhile, FIG. 3 shows another example of a packaging material. In this case, first, the polymer layer 110 and the aluminum layer 120 are stacked, a polymer layer of nylon 140 and PET 150 is then stacked, and thereafter, the graphite layer 130 is bonded to the outermost portion. That is, in this case, a battery cell is formed with a packaging material including only the polymer layers 110, 140, and 150 and the aluminum layer 120, and then the graphite layer 130 is bonded to the outside of the packaging material through an additional operation. In this case, the graphite layer 130 is separated from the aluminum layer 120 through the PET layer 150 and the nylon layer 140, thereby achieving electrical insulation, and performs heat conduction in the planar direction, thereby pursuing thermal balancing.

In a case in which the graphite layer 130 is formed together as the packaging material 100, a bonding process may be eliminated, which makes manufacturing easier, and in a case in which the graphite layer 130 is separately bonded, a packaging material without the graphite layer and a packaging material with the graphite layer may be appropriately mixed, which may result in a reduced material, reduced weight, and increased energy density.

Meanwhile, an insulating layer 160 may be additionally bonded to the outside of the graphite layer 130. The insulating layer 160 may include a MICA layer. The MICA layer may have mica as a main component to perform insulation and effectively block the propagation of flame. However, since the insulating layer 160 may have lower moldability compared to polymer, such a separate bonding method may be considered. By applying the insulating layer 160 together, the battery cell may simultaneously implement thermal balancing in the planar direction and flame blocking.

FIG. 4 shows an embodiment of a case in which the graphite layer 130 is additionally bonded to the outside while the polymer layer and the aluminum layer are integrally formed as a packaging material. In the packaging material, the graphite layer 130 may be placed in a position corresponding to a side surface of the battery cell 20, and the insulating layer 160 may be placed on the outermost side as shown in FIG. 5. Specifically, in the packaging material 100, in a state in which the polymer layer and the aluminum layer are integrally formed, the graphite layer 130 may be additionally bonded to the outside, the graphite layer 130 may be bent a plurality of times and bonded to wrap the battery cell 20, and the insulating layer 160 may be placed on the outside of the graphite layer 130 in a position corresponding to the side surface of the battery cell.

The case of FIG. 4 is a pouch-type battery cell 20, in which the graphite layer 130 is bonded to the outside of the packaging material. Also, as shown in FIG. 5, by adding the insulating layer 160 to a side section excluding the bottom of the battery cell, thermal balancing, flame blocking, and thermal propagation blocking are simultaneously implemented on the side surface without damaging the heat dissipation through the bottom of the battery cell 20.

FIGS. 6 and 7 show a battery module to which such a battery cell is applied. As mentioned above, the battery module is a group of a plurality of battery cells and is a concept that encompasses concepts, such as a stack, an assembly, and a bank.

The battery module according to the present disclosure includes a first battery cell 20 packaged with a packaging material including an aluminum layer and a polymer layer; and a second battery cell 20' packaged with a packaging material including an aluminum layer and a polymer layer, wherein the packaging material comprises the graphite layer 130 disposed on the aluminum layer or the polymer layer or between the aluminum layer and the polymer layer. That is, a general battery cell in which a graphite layer is not applied to the packaging material may be defined as the first battery cell 20, and a battery cell in which a graphite layer is applied to the packaging material may be defined as the first battery cell 20. The battery module of the present disclosure is intended to efficiently use graphite by appropriately mixing and arranging the first battery cell 20 and the second battery cell 20', thereby reducing weight and cost, and at the same time to implement performance equivalent to that of applying graphite to the entirety in terms of thermal balancing.

Specifically, a cell bank refers to a number of battery cells gathered between compression pads, and in the case of FIG. 6 is a case in which the number of battery cells in the bank is 4, and FIG. 7 is a case in which the number of battery cells is 3. In addition, each battery cell performs basic heat dissipation through the bottom by allowing the bottom to contact a cooling portion 50.

In both cases, the first battery cell 20 and the second battery cell 20' are arranged adjacent to each other. By arranging the first battery cell 20 and the second battery cell 20' in a mixed manner, the first battery cell 20 not including a graphite layer implements thermal balancing in the planar direction by utilizing the graphite layer 130 of the adjacent second battery cell 20'. Therefore, the first battery cell not including a graphite layer is disposed to contact the second battery cell 20' including the graphite layer 130, thereby omitting the graphite in a portion and reducing the cost and weight. In addition, since the graphite layer is omitted in a portion, it is possible to increase the overall energy density of the battery module.

Specifically, as in the case of FIG. 6, a pair of first battery cells 20 may be arranged adjacent to each other between a pair of second battery cells 20'. Also, the pair of first battery cells 20 that face and contact each other between the pair of second battery cells 20' may be arranged adjacent to each other with the graphite sheet 300 in between. In this manner, the first battery cell 20 placed in the center shares the graphite layer 130 of the second battery cell 20' on one side to perform thermal balancing and shares the separately added graphite sheet 300 on the other side to perform thermal balancing. As shown in FIG. 3, the insulating layer 160 is added to the graphite layer 130 and the graphite sheet 300, thereby preventing the spread of heat or flame.

Meanwhile, in the case of FIG. 7, the second battery cell 20' is located between a pair of first battery cells 20. In this case, the graphite layer 130 included in the second battery cell 20' in the center is shared, and the first battery cells 20 on opposing sides perform thermal balancing together.

Also, a compression pad 500 is placed on the outer side of each first battery cell 20, and the graphite sheet 300 may be disposed between the compression pad 500 and the first battery cell 20. Therefore, the first battery cell 20 performs thermal balancing by sharing the graphite layer 130 of the second battery cell 20' on one side and performs thermal balancing through a separately added graphite sheet 300 on the other side. As shown in FIG. 3, it is also possible to add the insulating layer 160 to the graphite layer 130 and the graphite sheet 300, thereby preventing the spread of heat or flame.

Meanwhile, FIGS. 8 and 9 show that the graphite sheet 300 is applied to the compression pad 500. The compression pad 500 is formed of a compressible material and plays a role in absorbing shrinkage/expansion due to charging/discharging of the battery cell. The graphite sheets 300 may be attached to opposing side surfaces of the compression pad 500 to implement thermal balancing of the adjacent first battery cell 20.

In addition, the compression pad 500 may be formed to include the insulating layer 160 in the center, so that it may also perform the function of blocking heat diffusion or flame propagation between battery cells arranged with the compression pad 500 therebetween.

In the case of FIG. 10, a battery pack BP to which a battery module according to the present disclosure is applied and a vehicle V equipped with the battery pack BP are shown. In the case of the present disclosure, thermal balancing may be effectively performed at the cell level by applying a graphite layer or sheet to the side surface of the battery cell or the compression pad. In addition, heat dissipation is also improved by bending the graphite layer or sheet to contact a cooling portion therebelow.

In addition, since one graphite layer or sheet is bent twice to cover opposing side surfaces and the lower surface of one battery cell at the same time, the assembly is excellent, and since the compression pad also has an insulating layer together with the graphite sheet, thermal balancing of the battery cell may be improved, while thermal propagation is prevented.

Although the present disclosure has been described above with reference to embodiments, it will understood by those skilled in the art that various modifications and changes may be made to the present disclosure without departing from the idea and scope of the present disclosure as set forth in the following claims.

## Claims

1. A battery cell covered by a packaging material including an aluminum layer and a polymer layer, wherein the packaging material comprises a graphite layer on the aluminum layer, or on the polymer layer, or between the aluminum layer and the polymer layer.

2. The battery cell of claim 1, wherein the graphite layer of the packaging material is in contact with the aluminum layer.

3. The battery cell of claim 1, wherein, in the packaging material, the aluminum layer is on an outside of the polymer layer, and the graphite layer is on an outside of the aluminum layer.

4. The battery cell of claim 1, wherein, in the packaging material, the polymer layer and the aluminum layer are integral, and the graphite layer bonds to outside of the polymer layer and the aluminum layer.

5. The battery cell of claim 1, wherein, in the packaging material, the graphite layer corresponds to a side surface of the battery cell.

6. The battery cell of claim 1, wherein, in the packaging material, an insulating layer is on an outermost side.

7. The battery cell of claim 1, wherein, in the packaging material, the polymer layer and the aluminum layer are integral, the graphite layer bonds to outside of the polymer layer and the aluminum layer, the graphite layer bends a plurality of times and bonds to wrap the battery cell, and an insulating layer is on an outside of the graphite layer in a position corresponding to a side surface of the battery cell.

8. A battery module comprising:
a first battery cell covered by a first packaging material including an aluminum layer and a polymer layer; and
a second battery cell covered by a second packaging material including an aluminum layer and a polymer layer, wherein the packaging material comprises a graphite layer on the aluminum layer, or on the polymer layer, or between the aluminum layer and the polymer layer,
wherein the first battery cell and the second battery cell are adjacent to each other.

9. The battery module of claim 8, wherein a pair of first battery cells are adjacent to each other between a pair of second battery cells.

10. The battery module of claim 9, wherein the pair of first battery cells are adjacent to each other with the graphite sheet therebetween.

11. The battery module of claim 9, wherein compression pads are each on an outside of the second battery cell.

12. The battery module of claim 8, wherein the second battery cell is between a pair of first battery cells.

13. The battery module of claim 12, wherein compression pads are each on the outside of the first battery cell.

14. The battery module of claim 13, wherein a graphite sheet is between the compression pad and the first battery cell.

15. The battery module of claim 8, wherein a cell bank comprises at least one first battery cell and at least one second battery cell, and compression pads are each on opposing outer sides of the cell bank.

16. The battery module of claim 15, wherein a graphite sheet is disposed between the compression pad and the adjacent first battery cell adjacent to the compression pad.

17. The battery module of claim 15, wherein the compression pad includes an insulating layer.

18. A battery pack comprising the battery module of claim 8.

19. A vehicle comprising the battery module of claim 8.
